# EUROPÄISCHE PATENTANMELDUNG

(11) **EP 2 023 016 A1**
(43) Veröffentlichungstag der Anmeldung: **11.02.2009**
(21) Anmeldenummer: 08009377.6
(22) Anmeldetag: 21.05.2008
(51) Int. Cl.: F16H 59/04

(54) **Schaltungs-Getriebe-Einheit**

(30) Priorität: 09.08.2007 DE 102007037691
(71) Anmelder: GM Global Technology Operations, Inc., Detroit MI 48265-3 (US)
(72) Erfinder: Nicholson, Daniel Edward, 61440 Oberursel (DE); Bednarek, Georg, 64285 Darmstadt (DE)
(74) Vertreter: Kraenzmer, Martin

(57) **Zusammenfassung**

Eine Schaltungs-Getriebe-Einheit umfasst ein zwischen mehreren Gängen schaltbares Stufengetriebe (7), eine Kupplung (12), einen Schalthebel (1) und eine Steuerschaltung (10) zum Schalten des Stufengetriebes (7) in einen mittels des Schalthebels (1) spezifizierten Gang. Der Schalthebel (1) ist entlang einer Wählgasse (4) und mehrerer von der Wählgasse (4) abzweigender Schaltgassen (6) bewegbar. Jedem Gang ist eine Schaltgasse (6) zugeordnet, und die Steuerschaltung (10) ist eingerichtet, in dem Stufengetriebe (7) jeweils denjenigen Gang zu schalten, der durch Platzieren des Schalthebels (1) in der zugeordneten Schaltgasse (6) spezifiziert ist.

## Beschreibung

Die vorliegende Erfindung betrifft eine Schaltungs-Getriebe-Einheit mit einem zwischen mehreren Gängen schaltbaren Stufengetriebe, einer Kupplung und einer Steuerschaltung zum Schalten des Stufengetriebes in einen mittels des Schalthebels spezifizierten Gang. Schaltungs-Getriebe-Einheiten dieser Arten, allgemein mit dem Schlagwort "shift-by wire" bezeichnet, unterdrücken die Übertragung von mechanischen Schwingungen aus dem Motorraum in die Fahrgastzelle, die bei einer herkömmlichen mechanischen Verbindung zwischen Schalthebel und Stufengetriebe unvermeidlich ist, und sie vereinfachen das Schalten, indem sie den Fahrer vor Effekten, wie etwa einem temperatur- oder geschwindigkeitsabhängigen Schaltwiderstand des Stufengetriebes abschirmen.

Herkömmliche shift-by wire-Einheiten verwenden Tipptasten oder einen mit einem einzigen Freiheitsgrad beweglichen Hebel, wobei eine Betätigung einer Tipptaste oder ein einmaliges Auslenken des Hebels ein Heraufschalten um einen Gang und das Betätigen einer zweiten Taste oder das Schwenken des Hebels in entgegengesetzter Richtung zum Herunterschalten um einen Gang führen. Der Fahrer gewinnt aus der Art der Tasten- oder Schalterbewegung keinerlei Aufschluss über den gegenwärtig eingelegten oder soeben neu ausgewählten Gang. Um das Getriebe korrekt zu steuern, muss der Fahrer sich jederzeit des eingelegten Gangs bewusst sein, um zu wissen, ob es überhaupt möglich ist, herauf- oder herunterzuschalten. Es ist zwar ohne weiteres möglich, ein Anzeigeelement vorzusehen, welches den jeweils eingelegten Gang anzeigt, doch muss ein Fahrer, um auf das Anzeigeelement schauen zu können, den umgebenden Verkehr aus den Augen lassen, was offensichtlich nicht wünschenswert ist. Aufgabe der Erfindung ist daher, eine shift-by wire-Einheit anzugeben, die dem Fahrer einen Rückschluss auf den aktuell eingelegten Gang ermöglicht, ohne dafür eine Anzeige ablesen zu müssen.

Die Aufgabe wird gelöst, indem bei einer Schaltungs-Getriebe-Einheit der anfangs angegebenen Art der Schalthebel entlang einer Wählgasse in mehrere von der Wählgasse abzweigende Schaltgassen bewegbar ist, wobei jedem Gang eine Schaltgasse zugeordnet ist und die Steuerschaltung eingerichtet ist, mit Hilfe von Aktoren in dem Getriebe jeweils denjenigen Gang zu schalten, der durch Platzierung des Schalthebels in der zugeordneten Schaltgasse spezifiziert ist.

Auf diese Weise ist eine eindeutige Beziehung zwischen der Stellung, in der die Hand des Fahrers bei Schalten den Schalthebel vorfindet oder freigibt, und dem vor bzw. nach dem Schalten eingelegten Gang hergestellt.

Eine gleichermaßen eindeutige Beziehung zwischen der Stellung, in der der Fahrer den Schalthebel während des Schalten hält, und der internen Konfiguration des Getriebes kann hergestellt werden, wenn wenigstens ein dem Schalthebel zum Erfassen von dessen Stellung in der Wählgasse und den Schaltgassen zugeordneter Stellungssensor als Funktion der Stellung kontinuierlich variable Stellungsparameterwerte liefert und in der Steuerschaltung Sollstellungen der Aktoren als stetige Funktionen der Parameterwerte vorgegeben sind. Wie bei einer rein mechanischen Verbindung zwischen Schalthebel und Stufengetriebe kann der Fahrer die Zeitdauer eines Schaltvorgangs und dessen Ablauf selbst bestimmen, einen Schaltvorgang ohne Schalten abbrechen, Gänge überspringen etc.

Alternativ kann dem Schalthebel wenigstens ein Stellungssensor zum Erfassen der Stellung des Schalthebels in der Wählgasse und den Schaltgassen zugeordnet sein, der als Funktion der Stellung diskret variable Stellungsparameterwerte liefert, wobei dann die Steuerschaltung zweckmäßigerweise eingerichtet ist, bei einer Änderung des aktuellen Stellungsparameterwerts einen der Aktoren gemäß einem vorgegebenen Ablauf zu steuern. Der vorgegebene Ablauf kann unterschiedliche Parameter des Aktorbetriebs festlegen. So kommt z.B. in Betracht, die Position des Aktors oder die vom Aktor auf das Getriebe ausgeübte Kraft als Funktion der Zeit festzulegen. Alternativ kann die vom Aktor ausgeübte Kraft als Funktion seiner Position vorgegeben sein, etc. Dies gibt dem Fahrer zwar weniger Freiheit, andererseits reduziert sich hierdurch die Gefahr einer Beschädigung des Getriebes durch unsachgemäße Bedienung.

Um ein Fahrzeug mit der erfindungsgemäßen Schaltungs-Getriebe-Einheit als eine Kraftstoff sparende Alternative auch für Fahrer attraktiv zu machen, die herkömmliche Automatikgetriebe gewohnt sind, kann die Steuerschaltung auch ausgelegt sein, um das Öffnen und Schließen der Kupplung während des Schaltens zu steuern.

Hierzu kann in jeder Schaltgasse ein erster und ein zweiter Schaltpunkt definiert sein, wobei dann die Steuerschaltung eingerichtet ist, die Kupplung zu öffnen, wenn der Schalthebel den ersten Schaltpunkt in Richtung zur Wählgasse hin passiert und die Kupplung zu schließen, wenn der Schalthebel den zweiten Schaltpunkt in Richtung von der Wählgasse fort passiert. Die Position der Kupplung kann wie oben für die Konfiguration des Getriebes beschrieben jeweils als eine stetige Funktion der Schalthebelstellung sein oder jeweils bei Passieren des Schaltpunkts gemäß einem vorgegebenen Ablauf gesteuert werden.

Die beiden Schaltpunkte können jeweils identisch sein; um insbesondere im Falle einer Steuerung gemäß einem vorgegebenen Ablauf einen Hysterese-Effekt zu erzielen, kann der erste Schaltpunkt näher an der Wählgasse liegen als der zweite. Um die Kupplung zu Beginn bzw. am Ende eines Schaltvorgangs möglichst bald öffnen bzw. schließen zu können, ist es jedoch bevorzugt, wenn der zweite Schaltpunkt näher an der Wählgasse liegt als der erste.

Um insbesondere im Falle einer Steuerung gemäß einem vorgegebenen Ablauf Verzögerungen beim Schaltvorgang zu vermeiden, ist es zweckmäßig, dass die Steuerschaltung ferner eingerichtet ist, die Richtung einer Bewegung des Schalthebels in der Wählgasse zu erfassen, anhand der erfassten Richtung einen neu zu schaltenden Gang zu mutmaßen und eine Schaltbewegung des Getriebes in Richtung einer dem gemutmaßten Gang entsprechenden Getriebekonfiguration zu steuern. So sind die für einen Gangwechsel erforderlichen Bewegungen im Getriebe bereits wenigstens teilweise abgeschlossen, wenn der Schalthebel den Eingang der Schaltgasse des betreffenden Gangs erreicht.

Um Verzögerungen beim Schalten zu vermeiden, kann die Steuerschaltung auch mit einem Drehzahlsensor zum Erfassen der Drehzahl einer Welle des Getriebes verbunden und eingerichtet sein, bei Erfassung einer Bewegung des Schalthebels anhand einer aktuellen Drehzahl einen neu zu schaltenden Gang zu mutmaßen und eine Schaltbewegung des Stufengetriebes in Richtung einer dem gemutmaßten Gang entsprechenden Getriebekonfiguration zu steuern. So weist eine Drehzahl oberhalb einer hohen Schwelle im Allgemeinen darauf hin, dass ein Hochschalten beabsichtigt ist, während eine Drehzahl unterhalb einer niedrigen Schwelle auf ein beabsichtigtes Herunterschalten hinweist. Die Schwellen können für jeden Gang spezifisch festgelegt sein.

Eine weitere Möglichkeit, Schaltverzögerungen zu vermeiden, ist, den neu einzulegenden Gang anhand der von einem geeigneten Sensor erfassten Motorlast zu mutmaßen. Wenn eine Schalthebelbewegung bei hoher Last oder zusammen mit einem Lastanstieg erfasst wird, so weist dies auf den Wunsch des Fahrers hin, zurückzuschalten, während aus einer Schalthebelbewegung bei niedriger aber nicht verschwindender Last auf die Absicht zum Hochschalten geschlossen werden kann. Eine Schaltbewegung nach Rückgang der Last auf Null kann ein Hinweis auf den Wunsch des Fahrers sein, zurückzuschalten um die Bremswirkung des Motors zu nutzen.

Um den neu einzulegenden Gang in einer möglichst frühen Phase des Schaltvorgangs mutmaßen zu können, ist die Steuerschaltung zweckmäßigerweise eingerichtet, die Bewegung des Schalthebels jeweils vor Verlassen der Schaltgasse des bisher eingelegten Gangs zu erfassen.

Hierfür und/oder um die Betätigung der Kupplung zu steuern kann jeder Schaltgasse ein Stellungssensor zugeordnet sein, der ein das Eintreten des Schalthebels in die Schaltgasse oder das Verlassen der Schaltgasse anzeigendes Signal an die Steuerschaltung liefert.

Zweckmäßigerweise ist die Steuereinheit eingerichtet, durch den Schalthebel spezifizierte Schaltvorgänge nicht auszuführen, wenn dies zu einer Beschädigung des Stufengetriebes führen könnte, z.B. ein Schalten in den Rückwärtsgang aus schneller Vorwärtsfahrt. Da dies zu einer Diskrepanz zwischen der Stellung des Schalthebels entsprechenden Gang und dem tatsächlich aktiven Gang führt, ist zweckmäßigerweise eine Anzeigevorrichtung vorgesehen, um den Fahrer ggf. auf die Diskrepanz hinzuweisen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung einer erfindungsgemässen Schaltungs- Getriebe-Einheit; und
- Fig. 2: diverse Schaltpunkte, projiziert auf eine den Schalthebel führende Schaltkulisse.

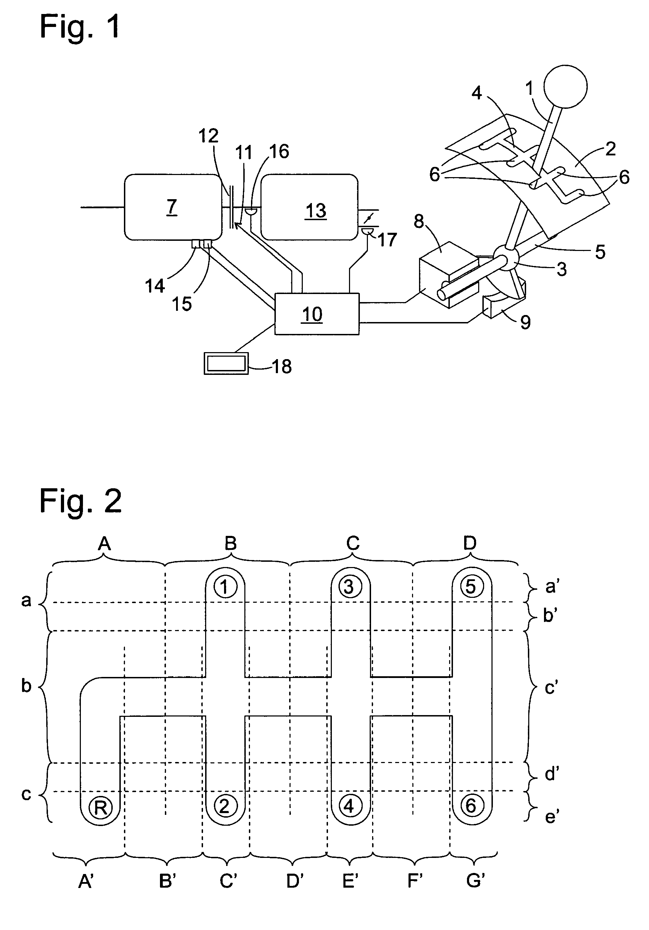

In der schematischen Darstellung der Fig. 1 ist ein Handschalthebel in der Fahrgastzelle eines Fahrzeugs mit 1, eine den Handschalthebel 1 führende Schaltkulisse mit 2 und ein Gelenk, in welchem der Handschalthebel 1 mit zwei Freiheitsgraden drehbar ist, mit 3 bezeichnet. Die Schaltkulisse 2 hat eine Wählgasse 4, die sich in einer Ebene erstreckt, die auf einer durch das Gelenk 3 verlaufenden Welle 5 senkrecht steht. Von der Wählgasse 4 zweigen Schaltgassen 6 rechtwinklig ab, deren jede einem von sechs Vorwärtsgängen bzw. einem Rückwärtsgang eines Stufengetriebes 7 zugeordnet ist. Die Welle 5 rotiert mit der Bewegung des Handschalthebels 1 entlang der Schaltgasse 6, und eine Drehstellung der Welle 5 wird von einem Winkelsensor 8 abgetastet. Ein zweiter Winkelsensor 9 dient zur Erfassung einer Drehbewegung des Handschalthebels 1 um ein zur Welle 5 senkrechte Achse, in eine der Schaltgassen 6 hinein bzw. aus ihr heraus.

Eine Steuerschaltung 10 ist mit den beiden Winkelsensoren 8, 9, einem Aktor 11 zum Öffnen und Schließen einer Kupplung 12 zwischen dem Stufengetriebe 7 und einem Motor 13 sowie mit Aktoren 14, 15 zum Antreiben einer Schalt- bzw. Wählbewegung in dem Stufengetriebe 7 verbunden.

Der Winkelsensor 8 ist in der Lage, zwischen in dieser Ausgestaltung wenigstens vier verschiedenen Winkelpositionen A, B, C, D zu unterscheiden, die in Fig. 2 projiziert auf die Schaltkulisse 2 dargestellt sind. Die Grenze zwischen zwei dieser Winkelpositionen kreuzt die Wählgasse 4 jeweils zwischen zwei benachbarten Schaltgassen 6. Der Winkelsensor 9 unterscheidet zwischen drei Winkelpositionen a, b, c, wie ebenfalls in Fig. 2 aufgetragen. Jeder in der Schaltkulisse 2 erreichbaren Kombination der Positionen A bis D mit den Positionen a und c ist ein Gang des Stufengetriebes zugeordnet, wiejeweils durch die von einem Kreis umgebenen Zeichen R, 1, 2, ..., 6 in der Fig. angegeben.

Wenn der Fahrer den Schalthebel 1 aus der einem eingelegten Gang zugeordneten Position, z.B. B für den Winkelsensor 8 und a für den Winkelsensor 9, ausrückt, so erfasst zunächst der Winkelsensor 9 als Winkelposition "b", wenn der Schalthebel 1 in Richtung der Wählgasse 4 verschoben wird. Die Steuerschaltung 10 reagiert hierauf mit Öffnen der Kupplung 12. Die Aktoren 14, 15_werden noch nicht angesteuert.

Wenn der Schalthebel 1 die Wählgasse 4 kreuzt, um den zweiten Gang einzulegen, so wird dies vom Winkelsensor 9 erfasst, sobald der Handschalthebel 1 die Position c erreicht. Wenn dies geschieht, steuert die Steuerschaltung 10 die Aktoren gemäß einem vorgegebenen Ablauf 14, 15 an, um den zweiten Gang einzulegen, und steuert anschließend den Aktor 11 an, um die Kupplung 12 wieder zu schließen. Wird hingegen der Handschalthebel 1 der Wählgasse 4 verschoben, so erfasst dies der Winkelsensor 8, sobald z.B. die Position C erreicht ist. Da der Schalthebel 1 von niedrigeren Gängen her kommt, kann angenommen werden, dass der einzulegende Gang der dritte Gang sein wird. Die Steuerschaltung 10 beginnt daher bereits mit Eintritt des Handschalthebels 1 in die Position C mit dem Ansteuern der Aktoren 14, 15, um den dritten Gang einzulegen, so dass, wenn der Hebel 1 die Position a in der Schaltgasse des dritten Gangs erreicht, lediglich noch die Kupplung geschlossen werden muss. Wird hingegen der Schalthebel 1 in die Schaltgasse des vierten Gangs verschoben, so findet eine entsprechende Schaltbewegung, gefolgt vom Schließen der Kupplung, mit dem Übergang des Hebels 1 in die Position c statt. Anders als bei einem herkömmlichen, nur in einem Freiheitsgrad beweglichen Schalthebel einer Shift-by-Wire-Einheit kann der Fahrer hier also mit einer durchgehenden Bewegung zwischen nicht unmittelbar aufeinander folgenden Gängen umschalten.

Vorteilhafter ist eine Unterteilung des Erfassungsbereichs des Winkelsensors 9 in mindestens fünf Positionen a', b' ... e', wie ebenfalls in Fig. 2 dargestellt, wobei die Wählgasse 4 der Position c' entspricht und die Schaltgassen 6 jeweils in zwei Positionen a', b' bzw. d', e' unterteilt sind. Jeweils beim Übergang des Winkelsensors 9 von a' nach b' (bzw. von e' nach d') wird der Beginn eines Schaltvorgangs erkannt und die Kupplung 12 geöffnet. Wenn der Schalthebel 1 die Wählgasse 4 kreuzt, ohne dass sich die von Sensor 8 erfasste Position ändert, so beginnt die Steuerschaltung 10 bei Erreichen der Position d' mit dem Steuern der Schaltbewegung und schließt die Kupplung mit Erreichen der Position e'. Ändert sich hingegen während der Bewegung des Hebels 1 die Position des Sensors 8, z.B. von B nach C, so kann eine Schaltbewegung des Getriebes 7 in Richtung des dritten Gangs bereits bei Erreichen der Stellung C begonnen werden, so dass sie zumeist bereits abgeschlossen sein wird, wenn der Schalthebel die Position a' in der Schaltgasse des dritten Gangs erreicht. Tritt stattdessen der Schalthebel in die Schaltgasse des vierten Gangs ein, so erkennt die Steuerschaltung 10 dies beim Übergang in die Position d' und löst eine entsprechende Schaltbewegung des Getriebes 7 aus.

Eine feinere Unterteilung des Erfassungsbereichs des Winkelsensors 8, z.B. in Positionen A', B'... G', wie in Fig. 2 gezeigt, ermöglicht es, bei einer Bewegung des Handschalthebels 1 von links nach rechts in der Wählgasse jeweils beim Übergang von A' nach B', von C' nach D' bzw. von E' nach F' eine Schaltbewegung im Getriebe 7 zu beginnen, durch die der niedrigere der beiden in der Position C', E' bzw. G' erreichbaren Gänge eingelegt wird, wohingegen bei Bewegungen des Hebels 1 in Gegenrichtung eine entsprechende Schaltbewegung in Richtung des Rückwärtsgangs bzw. des höheren der Gänge der Position C' bzw. E' jeweils beim Übergang von C' nach B', von E' nach D' bzw. von G' nach F' gestartet wird. Dadurch verlängert sich die für den Schaltvorgang verfügbare Zeit, und es genügt eine geringere Leistung der Aktoren 14, 15 um mit einer vorgegebenen Geschwindigkeit schalten zu können.

Die Steuereinheit 10 führt bei jedem Schaltvorgang eine Sicherheitsprüfung durch, in der sie entscheidet, ob der vom Fahrer am Schalthebel 1 ausgewählte Gang mit dem gegenwärtigen Betriebszustand des Fahrzeugs kompatibel ist. Im Falle einer Inkompatibilität, z.B. wenn die Fahrzeuggeschwindigkeit zu hoch ist, um eine Schalten in einen niedrigen Gang oder in den Rückwärtsgang zu erlauben, dann zeigt die Steuerschaltung 10 auf einer Anzeigevorrichtung 18 am Armaturenbrett die Bezeichnung des gegenwärtig eingelegten und des ausgewählten Gangs an, um auf die Diskrepanz aufmerksam zu machen.

Einer weiterentwickelten Ausgestaltung zufolge kann die Steuerschaltung 10 einen neu einzulegenden Gang zu einem noch früheren Zeitpunkt, noch vor Verlassen der Schaltgasse des ursprünglichen Gangs, mit Hilfe eines Drehzahlsensors 16 mutmaßen, der an der Abtriebswelle des Motors 13 angeordnet ist. Zu diesem Zweck ist in der Steuerschaltung 10 zu jedem Gang eine obere und eine untere Drehzahlschwelle vorgegeben. Wenn der Winkelsensor 8 eine Bewegung des Schalthebels 1 erfasst, während die Drehzahl zwischen der oberen und der unteren Schwelle liegt, verfährt die Steuerschaltung für die Gangprognose wie oben beschrieben. Ist die Drehzahl niedriger als die untere Schwelle, wird der nächstniedrigere Gang prognostiziert; liegt sie über der oberen Schwelle, dann wird der nächsthöhere Gang prognostiziert.

Als ein weiteres Prognosekriterium kann auch das Signal eines Lastsensors 17, z.B. eines Sensors für die Drosselklappenstellung des Motors 13, ausgewertet werden. Die Gangprognose anhand der Drehzahl und/oder der Motorlast ist unabhängig von der Art der Führung des Schalthebels 1 in der Kulisse 2 oder sogar unabhängig davon möglich, ob überhaupt ein Schalthebel 1 vorhanden ist.

### Bezugszeichenliste

- 1: Handschalthebel
- 2: Schaltkulisse
- 3: Gelenk
- 4: Wählgasse
- 5: Welle
- 6: Schaltgassen
- 7: Stufengetriebe
- 8: Winkelsensor
- 9: Winkelsensor
- 10: Steuerschaltung
- 11: Aktor
- 12: Kupplung
- 13: Motor
- 14: Aktor
- 15: Aktor
- 16: Drehzahlsensor
- 17: Lastsensor
- 18: Anzeigevorrichtung

## Patentansprüche

1. Schaltungs-Getriebe-Einheit mit einem zwischen mehreren Gängen schaltbaren Stufengetriebe (7), einer Kupplung (12), einem Schalthebel (1) und einer Steuerschaltung (10) zum Schalten des Stufengetriebes (7) in einen mittels des Schalthebels (1) spezifizierten Gang mit Hilfe von Aktoren (14, 15), **dadurch gekennzeichnet, dass** der Schalthebel (1) entlang einer Wählgasse (4) und mehrerer von der Wählgasse (4) abzweigender Schaltgassen (6) bewegbar ist, wobei jedem Gang eine Schaltgasse (6) zugeordnet ist, und die Steuerschaltung (10) eingerichtet ist, in dem Stufengetriebe (7) jeweils denjenigen Gang zu schalten, der durch Platzieren des Schalthebels (1) in der zugeordneten Schaltgasse (6) spezifiziert ist.

2. Schaltungs-Getriebe-Einheit nach Anspruch 1, **dadurch gekennzeichnet, dass** dem Schalthebel (1) wenigstens ein Stellungssensor (8, 9) zum Erfassen der Stellung des Schalthebels (1) in der Wählgasse (4) und den Schaltgassen (6) zugeordnet ist, der als Funktion der Stellung kontinuierlich variable Stellungsparameterwerte liefert, und dass in der Steuerschaltung (10) Sollstellungen von der Aktoren (14, 15) als stetige Funktionen der Parameterwerte vorgegeben sind.

3. Schaltungs-Getriebe-Einheit nach Anspruch 1, **dadurch gekennzeichnet, dass** dem Schalthebel (1) wenigstens ein Stellungssensor (8, 9) zum Erfassen der Stellung des Schalthebels (1) in der Wählgasse (4) und den Schaltgassen (6) zugeordnet ist, der als Funktion der Stellung diskret variable Stellungsparameterwerte liefert, und dass die Steuerschaltung eingerichtet ist, bei einer Änderung des aktuellen Stellungsparameterwerts einen der Aktoren (14, 15) gemäß einem vorgegebenen Ablauf zu steuern.

4. Schaltungs-Getriebe-Einheit nach einem der vorhergehenden Ansprüche, **dadurch gekennzeichnet, dass** in jeder Schaltgasse (6) ein erster und ein zweiter Schaltpunkt definiert sind und dass die Steuerschaltung (10) eingerichtet ist, die Kupplung (12) zu öffnen, wenn der Schalthebel (1) den ersten Schaltpunkt in Richtung zur Wählgasse (4) hin passiert und die Kupplung (12) zu schließen, wenn der Schalthebel (1) den zweiten Schaltpunkt in Richtung von der Wählgasse (4) fort passiert.

5. Schaltungs-Getriebe-Einheit nach einem der Ansprüche 1 bis 4, **dadurch gekennzeichnet, dass** die Steuerschaltung (10) eingerichtet ist, die Richtung einer Bewegung des Schalthebels (1) in der Wählgasse (4) zu erfassen, anhand der erfassten Richtung einen neu zu schaltenden Gang zu mutmaßen und eine Schaltbewegung des Stufengetriebes (7) in Richtung einer dem gemutmaßten Gang entsprechenden Getriebekonfiguration zu steuern.

6. Schaltungs-Getriebe-Einheit nach einem der Ansprüche 1 bis 4, **dadurch gekennzeichnet, dass** die Steuerschaltung (10) mit einem Drehzahlsensor (16) zum Erfassen der Drehzahl einer Welle des Getriebes verbunden und eingerichtet ist, bei Erfassung einer Bewegung des Schalthebels (1) anhand einer aktuellen Drehzahl einen neu zu schaltenden Gang zu mutmaßen und eine Schaltbewegung des Stufengetriebes (7) in Richtung einer dem gemutmaßten Gang entsprechenden Getriebekonfiguration zu steuern.

7. Schaltungs-Getriebe-Einheit nach einem der Ansprüche 1 bis 4, **dadurch gekennzeichnet, dass** die Steuerschaltung (10) mit einem Lastsensor (17) zum Erfassen der Last eines das Getriebe antreibenden Motors verbunden und eingerichtet ist, bei Erfassung einer Bewegung des Schalthebels (1) anhand einer aktuellen Last einen neu zu schaltenden Gang zu mutmaßen und eine Schaltbewegung des Stufengetriebes (7) in Richtung einer dem gemutmaßten Gang entsprechenden Getriebekonfiguration zu steuern.

8. Schaltungs-Getriebe-Einheit nach Anspruch 6 oder 7, **dadurch gekennzeichnet, dass** die Steuerschaltung (10) eingerichtet ist, die Bewegung des Schalthebels (1) jeweils vor Verlassen der Schaltgasse (6) des bisher eingelegten Gangs zu erfassen.

9. Schaltungs-Getriebe-Einheit nach einem der vorhergehenden Ansprüche, **dadurch gekennzeichnet, dass** jeder Schaltgasse (6) ein Stellungssensor (9) zugeordnet ist, der ein das Eintreten des Schalthebels (1)in die Schaltgasse (6) oder das Verlassen der Schaltgasse (6) anzeigendes Signal an die Steuerschaltung (10) liefert.

10. Schaltungs-Getriebe-Einheit nach einem der vorhergehenden Ansprüche, **dadurch gekennzeichnet, dass** die Steuerschaltung (10) mit einer Anzeigevorrichtung zum Anzeigen einer Abweichung zwischen einem durch die Platzierung des Schalthebels (1) ausgewählten Gang und einem aktuell im Stufengetriebe (7) eingelegten Gang verbunden ist.
